# EUROPEAN PATENT APPLICATION

(11) **EP 1 816 035 A1**
(43) Date of publication of application: **08.08.2007**
(21) Application number: 06001658.1
(22) Date of filing: 26.01.2006
(51) Int. Cl.: B60R 19/04

(54) **Bumper beam system for a motor vehicle body**

(71) Applicant: Wagon Automotive GmbH, 63857 Waldaschaff (DE)
(72) Inventor: Diehm, Jürgen, 97877 Wertheim (DE)
(74) Representative: Gesthuysen, von Rohr & Eggert

(57) **Abstract**

The invention relates to a bumper beam system for attachment to a front end (2) or a rear end (3) of a motor vehicle body (1), said body (1) defining a lengthwise direction between front end (2) and rear end (3) and a transverse direction crosswise to the lengthwise direction, the system comprising: two crash boxes (5) positioned in parallel to each other in the lengthwise direction and at a distance from each other in the transverse direction, a generally straight middle section (7), positioned in the transverse direction between the crash boxes (5), said middle section (7) being fixedly connected to the crash boxes (5), left and right preferably curved tail sections (8) extending the line of the middle section (7) beyond the crash boxes (5) and being fixedly connected to the middle section (7), wherein all said parts of the system are made from metal. The inventive system provides a middle section (7) that is a cold-roll-formed profile from a high-strength deep drawing steel, where the connections between the parts of the system (4) are made by welding.

## Description

The invention relates to a bumper beam system for a motor vehicle body according to the generic part of claim 1.

A bumper beam system is positioned at a front end or a rear end of the body of a motor vehicle in order to protect the vehicle body and in particular the passenger compartment thereof in case of a collision of the vehicle with an obstacle, Usually the parts of the system are made from metal, sometimes, however, plastics material is used. The shape of the bumper beam follows the line of the vehicle body usually with a slight curvature in the middle section. The term "generally straight" shall include such usual slight curvature. The term "parallel" shall include a small angle between the symmetry axes of the crash boxes.

In the bumper beam system that forms the starting point of the invention (DE 196 03 958 A1) two crash boxes are positioned in parallel to each other in the lengthwise direction of the motor vehicle body and at a distance from each other in the transverse direction. They are used to attach the system to the longitudinal beams of the vehicle chassis. A generally straight middle section is manufactured as an extruded rectangular profile from an aluminum alloy. As the bumper beam follows the profile of the vehicle body at the front end or the rear end the left and right tail sections have a curved profile. To achieve this the left and right curved tail sections are parts separate from the middle section. They are equally made from an extruded aluminum alloy profile that has the necessary curved cross section and is cut to length with the measure needed for the height of the bumper beam system. The two left and right curved tail sections from aluminum alloy material are inserted into the hollow rectangular profile that forms the middle section.

For this bumper beam system in addition reference can be made to DE 196 03 954 C2. The crash boxes of this system can be formed from extruded aluminum alloy and are connected to the straight middle section by screw connections.

Above explained prior art bumper beam system allows for different characteristics in the different parts of the system. A direct front impact is primarily relevant for the straight middle section and this straight middle section may be designed and formed to have the best possible resistance for this situation. However, the left and right curved tail sections can be provided with different characteristics and from generally different material.

A further prior art discloses a reinforcement member for the door of a motor vehicle body (US 4,090,734 A). In this system a side impact protection beam is split into an elongated central piece and two end pieces. The central piece is formed from a plate of high tensile strength steel by pressing or rolling a plate of this steel into a uniform cross section. Secured to the two longitudinally spaced end portions of this central piece are the two end pieces. Each end piece is formed from a plate of mild steel. As this mild steel is similar to the mild steel of which the inner panel of the door is made those two end pieces can be easily welded to the inner panel of the door. This prior art is silent about the way the central piece and the end pieces are connected. Welding seems to be no option, otherwise the end pieces would not be necessary at all.

The problem of the present invention is to improve the prior art bumper beam system for use as a steel-based system,

This problem is solved by a bumper beam system with the features of claim I,

In the present system the middle section of the bumper beam system which is still generally straight can be formed as a cold-roll-formed profile from a high-strength deep drawing steel with a tensile strength of more than 400 MPa, preferably even more than 600 MPa. All connections between the parts of the systems are made by welding.

There is no generally accepted definition for a high-strength steel. However, there is an important aspect to this in that the steel quality which is relevant here is that of a steel with deep drawing qualities which are relevant for automotive body components. Insofar the definition of a high-strength deep drawing steel within the framework of this invention is that of a deep drawing steel with a tensile strength of more than 400 MPa. Usual tensile strength is more than 500 MPa, mostly around 600 MPa and more.

The forming properties of high strength and ultra high-strength steels are helpful for a direct front impact. So this kind of steel is interesting for the generally straight middle section of the inventive bumper beam system. However, only the generally straight structure of the middle section allows the use of this type of steel.

High-strength steel has generally very good stretch arming properties. However, with the increasing yield strength formability decreases and rupture is a problem. The modular form of the inventive bumper beam system along with welding for the connections between the parts allows the use of this particular steel for the generally straight middle section.

An interesting option for high-strength steel with deep drawing qualities is multi-phase steel. Multi-phase steel, namely dual phase steel, complex phase steel or else, is identified by the at least two phases in the crystalline structure of the steel by viewing through a microscope. For interesting additional information about this reference can be made to the publication "Innovate! 1/05", pages 8 to 13, published by ThyssenKrupp in January 2005 and to the publication in "Max Planck Forschung 3/2004", pages 36 to 41 published by the Max Planck association in Germany.

For detailed information regarding multi-phase steel reference can be made to the publication of ThyssenKrupp Stahl "Forming properties of high-strength and ultra high-strength multi-phase steels" (no publication date, present here since October 11, 2005), as well as the data sheets for multi phase steels published by ThyssenKrupp in 1999 for the products DP-W, CP-W, MS-W, FB-W, DP-K, RA-K.

Preferably the multi-phase steel for the generally straight middle section is selected from a group consisting of Dual Phase Steel, Complex Phase Steel, TRIP-Steel, Ferrite/Bainite Phase Steel, and Retainedaustenite-Steel. In particular Dual Phase Steel and Complex Phase Steel are suitable for the present application, most preferable hot-rolled strip steel material.

However, it is not only multi-phase steel with deep drawing qualities that is available for the inventive application. Modern single phase steel may be used as well, preferably a TWIP-steel or a martensitic steel (see above cited publications in "Innovate!" and "Max Planck Forschung").

Further improvements and specifics of the inventive bumper beam system may be obtained from the dependent claims.

An interesting option is the use of intermediate metal elements that are directly weldable to different metals abutting those metal elements where the parts themselves may not be welded directly.

Now, the invention is described with reference to the drawings along with a number of preferred embodiments that are not limiting the scope of protection of the present application. In the drawings
- Fig. 1: shows a schematic view of a vehicle body with bumper beam systems at the front and rear ends,
- Fig. 2: shows a schematic view of a first embodiment of an inventive bumper beam system,
- Fig. 3: shows a second embodiment of an inventive bumper beam system.

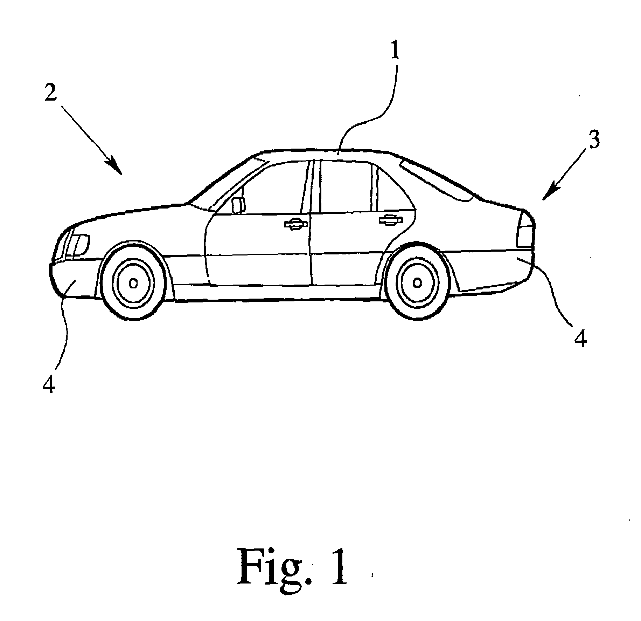

Fig. 1 shows a motor vehicle with a vehicle body 1 having a front end 2 and a rear end 3. At both ends the vehicle body 1 is equipped with a bumper beam system 4. In order to better explain the bumper beam system 4 it is helpful to define that the motor vehicle body 1 defines a lengthwise direction between the front end 2 and the rear end 3 and a transverse direction crosswise to the lengthwise direction.

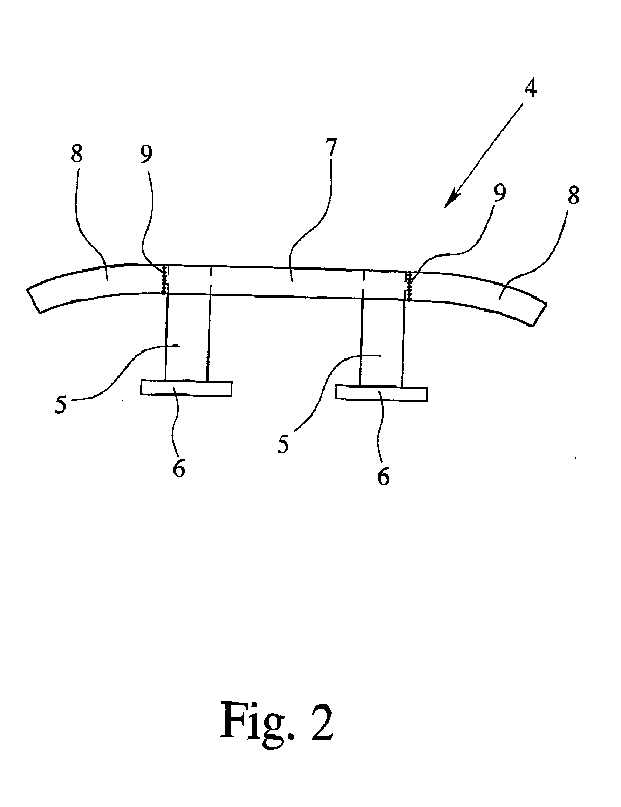

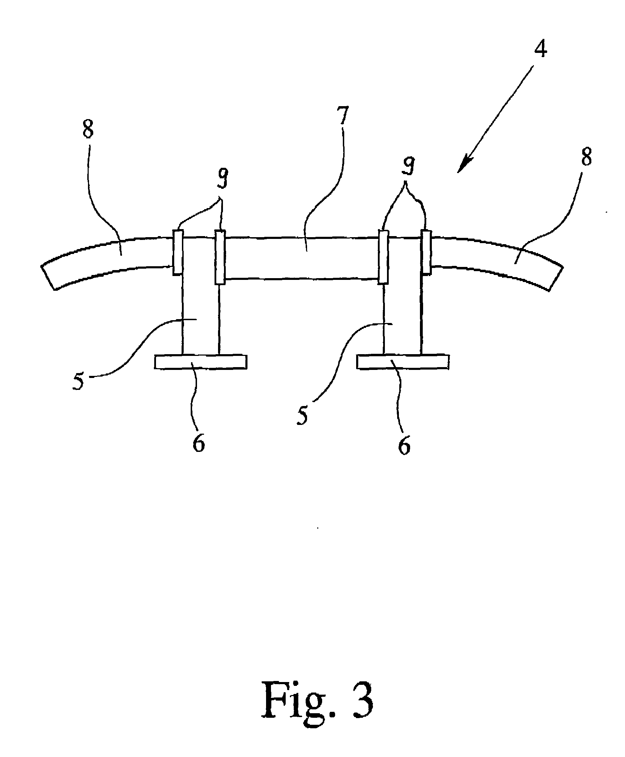

Subject of the present invention however is a bumper beam system 4 as such, this system comprising two crash boxes 5 positioned in parallel to each other in the lengthwise direction and at a distance from each other in the transverse direction (see Fig. 2 and Fig. 3). In Fig. 2 and Fig. 3 it can be seen that the two crash boxes 5 are used to attach the bumper beam system 4 to the longitudinal beam of the vehicle chassis. Each crash box 5 is equipped with a base plate 6 which is used to attach the crash box 5 to the longitudinal beam of the vehicle chassis. However, there are other constructions of crash boxes 5 that might not need a base plate 6. They are covered by the present invention, too.

The system 4 further comprises a generally straight middle section 7, positioned in the transverse direction between the crash boxes 5, said middle section 7 being fixedly connected to the crash boxes 5, and left and right preferably curved tail sections 8 extending the line of the middle section 7 beyond the crash boxes 5 and being fixedly connected to the middle section 7.

All parts of the system are made from metal, but different metals can be used. However, it is essential that the middle section 7 is a cold-roll-formed profile from a high-strength steel. The advantages of this type of middle section 7 have been explained in the introductory part of the description. However, by making the connections between the parts of the bumper beam system 4 by welding a disadvantage of such high-strength steel related to the risk of rupture is eliminated. Forming the middle section 7 as a generally straight (perhaps with the above mentioned slight curvature) part of the system 4 the form of this part is adapted to the formability-characteristics of the high-strength steel.

As explained above a preferred choice for high-strength steel with deep drawing qualities and with a tensile strength of more than 400 MPa, preferably more than 600 MPa, is multi-phase steel.

It is preferred that the multi phase steel is selected from a group consisting of Dual Phase Steel, Complex Phase Steel, TRIP-Steel, Ferrite/Bainite Phase Steel, and Retainedaustenite-Steel. Insofar please refer to the ThyssenKrupp publications mentioned in the introductory part of the description.

An alternative option for the high-strength steel with deep drawing qualities, however, is a high-strength single phase steel like TWIP-steel or martensitic steel, see the general explanation in the introductory part of the description

Fig. 2 shows a system where the middle section is formed as a C-profile. This is the usual form of a bumper beam which, as indicated, is overlapping the ends of the crash boxes 5. However, other profile forms like a D-profile or a B-Profile may be designed as well.

In this embodiment of Fig. 2 the tail sections 8 are directly connected to the middle section 7 by welding. Also the crash boxes 5 are connected to the middle section 7 by welding. In this embodiment the crash boxes 5 and the tail sections 8 are made from metal, obviously from steel, that is weldable to the high-strength multi-phase steel used for the middle section 7.

Sometimes, however, it may be interesting to make the tail sections 8 from a different metal e.g. from a regular strength steel or even from a light metal like an aluminum alloy. In Fig. 3 the tail sections 8 are cold-roll-formed and bent profiles preferably from a regular strength steel. Regular strength steel within this definition is a steel with deep drawing qualities with a tensile strength of less than 350 MPa.

The construction of the bumper beam system 4 of Fig. 3 is different from that in Fig. 2 in that the crash boxes 5 are dimensioned to extend up to the front line of the middle section 7 so that the middle section 7 is not overlapping the ends of the crash boxes 5, and the tail sections 8 are fixedly connected to the middle section 7 indirectly by their fixation to the crash boxes 5. Preferably this bumper beam system 4 will be used together with an outer sheath preferably from plastics material (not shown) that covers the connections between the different parts of the system 4 at the front line.

Fig. 3 indicates the connection 9 which can be just the welding seams. However, those connections 9 can be understood as intermediate elements that are weldable to both parts abutting the specific connection 9 where those two parts as such are not directly weldable to each other. This system offers further options for the use of different metals in the inventive bumper beam system 4.

## Claims

1. Bumper beam system
for attachment to a front end (2) or a rear end (3) of a motor vehicle body (1), said body (1) defining a lengthwise direction between front end (2) and rear end (3) and a transverse direction crosswise to the lengthwise direction,
the system (4) comprising:
two crash boxes (5) positioned in parallel to each other in the lengthwise direction and at a distance from each other in the transverse direction,
a generally straight middle section (7), positioned in the transverse direction between the crash boxes (5), said middle section (7) being fixedly connected to the crash boxes (5),
left and right preferably curved tail sections (8) extending the line of the middle section (7) beyond the crash boxes (5) and being fixedly connected to the middle section (7),
wherein all said parts of the system are made from metal,
**characterized in that**
the middle section (7) is a cold-roll-formed profile from a high-strength deep drawing steel with a tensile strength of more than 400 MPa, preferably more than 600 MPa and
the connections between the parts of the system (4) are made by welding.

2. Bumper beam system according to claim 1, **characterized in that**
the high-strength deep drawing steel is a multi-phase steel.

3. Bumper beam system according to claim 2, **characterized in that**
the multi phase steel is selected from a group consisting of Dual Phase Steel, Complex Phase Steel, TRIP-Steel, Ferrite/Bainite Phase Steel, and Retainedaustenite-Steel.

4. Bumper beam system according to claim 1, **characterized in that**
the high-strength deep drawing steel is a single phase steel, preferably a TWIP-steel or a martensitic steel.

5. Bumper beam system according to any of the preceding claims,
**characterized in that**
the middle section (7) is formed as a C-profile.

6. Bumper beam system according to any one of the preceding claims,
**characterized in that**
the tail sections (8) are cold-roll-formed and bent profiles, preferably from a regular strength steel with a tensile strength ofless than 350 MPa.

7. Bumper beam system according to any one of the preceding claims,
**characterized in that**
the crash boxes (5) and/or the tail sections (8) are made from steel that is weldable to the high-strength steel used for the middle section (7).

8. Bumper beam system according to any one of the preceding claims,
**characterized in that**
the crash boxes (5) are dimensioned to extend up to the front line of the middle section (7) so that the middle section (7) is not overlapping the ends of the crash boxes (5), and
the tail sections (8) are fixedly connected to the middle section (7) indirectly by their fixation to the crash boxes (5).

9. Bumper beam system according to any one of the claims 1 to 7,
**characterized in that**
the crash boxes (5) are dimensioned not to extend up to the front line of the middle section (7) so that the middle section (7) is overlapping the ends of the crash boxes (5), and
the tail sections (8) are fixedly connected to the middle section (7) directly,

10. Bumper beam system according to any one of the preceding claims,
**characterized in that**
where the connections are made between different metals that are not directly weldable, an intermediate metal element is provided that is weldable to both parts to be connected.
